# FASCICULE DE BREVET EUROPEEN

(11) **EP 3 398 486 B1**
(45) Date de publication et mention de la délivrance du brevet: **04.03.2020**
(21) Numéro de dépôt: 18169969.5
(22) Date de dépôt: 27.04.2018
(51) Int. Cl.: A47J 31/00

(54) **MACHINE DE PRÉPARATION DE BOISSONS, DONT DES BOISSONS LACTÉES, MUNIE D'UNE DOUCHETTE ET D'UN SUPPORT DE DOSETTE**
GETRÄNKEZUBEREITUNGSMASCHINE, U. A. VON MILCHGETRÄNKEN, DIE MIT EINER BRAUSE UND EINEM PADHALTER AUSGESTATTET IST
MACHINE FOR PREPARING BEVERAGES, INCLUDING DAIRY BEVERAGES, PROVIDED WITH A SPRINKLER HEAD AND A POD SUPPORT

(30) Priorité: 05.05.2017 FR 1753997
(43) Date de publication de la demande: 07.11.2018
(73) Titulaire: SEB S.A., 69130 Ecully (FR)
(72) Inventeur: MORIN, Gilles, 21490 VAROIS ET CHAIGNOT (FR)
(74) Mandataire: Bourrières, Patrice

(56) Documents cités:
- EP-A2- 0 549 887
- WO-A1-2004/098360
- WO-A1-2013/132375
- WO-A1-2015/101557
- US-A1- 2014 013 958

## Description

### Domaine technique

La présente invention se rapporte à une machine de préparation de boissons avec du lait chaud moussé. Une telle machine permet tout d'abord de réchauffer le lait dans un récipient, notamment une tasse, en le faisant mousser, ce lait se trouvant initialement dans le récipient sous forme liquide ou poudreuse. Puis, la machine permet la préparation d'un second ingrédient liquide, notamment du café, préparé au moyen d'une dosette, ce second ingrédient liquide étant déversé dans le récipient contenant le lait préalablement réchauffé et moussé.

### Etat de la technique

Les machine de préparation de boissons sont connues de l'homme du métier, certaines d'entre elles permettant la préparation de boissons à base de lait chaud moussé. D'autres de ces machines, bien que n'ayant pas pour vocation de préparer des boissons avec du lait chaud moussé, présentent tout de même comme particularité d'être multifonction, permettant par exemple de préparer une grande quantité de café dans une verseuse ou de préparer un café sous pression à l'unité dans une tasse.

A ce titre, il est connu la demande de brevet publiée sous le numéro EP0549887 qui divulgue une machine de préparation de boissons chaudes comportant une douchette agencée au-dessus d'un porte-filtre pour réaliser un café filtre en grande quantité dans une verseuse. Cette machine permet de rapporter une chambre d'infusion, en forme de cuillère, sous la douchette pour réaliser un café sous pression à la tasse. La chambre d'infusion est amovible pour passer en mode préparation de café en grande quantité dans la verseuse ou en mode préparation de café sous pression à l'unité dans une tasse. La machine comporte un support de tasse pivotant pour soit positionner la verseuse sous la douchette, le support de tasse étant rangé, soit positionner la tasse sur le support de tasse, sous la chambre d'infusion. Cette machine n'est cependant pas prévue pour la préparation de boissons à base de lait chaud moussé.

Il est aussi connu la demande de brevet DE19545111 qui divulgue une machine de préparation de boissons chaudes comportant une douchette agencée au-dessus d'un porte-filtre pour réaliser un café filtre en grande quantité dans une verseuse. La machine comporte aussi une arrivée d'eau chaude sous pression dans une chambre d'infusion pour réaliser un café sous pression à l'unité dans une tasse. En outre, la machine comporte une buse de vapeur pour réaliser le réchauffage et le moussage de lait. Ainsi, cette machine présente trois fonctions différentes permettant de réaliser un café en grande quantité, un café sous pression à l'unité dans une tasse, voire un café sous pression à l'unité avec du lait chaud moussé.

Il est aussi connu la demande de brevet EP1820429 qui divulgue une machine de préparation de boissons chaudes comportant une arrivée d'eau chaude sous pression dans une chambre d'infusion pour réaliser un café sous pression à l'unité dans une tasse. En outre, la machine comporte une douchette agencée au-dessus d'un récipient pour réaliser le réchauffage et le moussage de lait. Cette machine n'est cependant pas prévue pour la préparation de café en grande quantité dans une verseuse.

Il est aussi connu la demande de brevet EP2476352 qui divulgue une machine de préparation de boissons chaudes comportant un conduit d'injection d'eau agencé au-dessus d'un porte-filtre pour réaliser un café filtre en grande quantité dans une verseuse. En outre, la machine comporte une arrivée d'eau chaude sous pression dans une chambre d'infusion pour réaliser un café sous pression à la tasse, la chambre d'infusion étant raccordée à une buse par laquelle se déverse dans la tasse, le café sous pression. Cette machine n'est cependant pas conçue pour la préparation de lait chaud moussé.

Il est aussi connu la demande de brevet US2014013958 qui divulgue une machine de préparation de boissons chaudes comportant un conduit d'injection d'eau agencé au-dessus d'un porte-filtre pour réaliser un café filtre en grande quantité dans une verseuse. En outre, la machine comporte une arrivée d'eau chaude sous pression dans une chambre d'infusion pour réaliser un café sous pression à la tasse. Cette machine n'est cependant pas conçue pour la préparation de lait chaud moussé.

Le document WO 2015/101557 divulgue également une machine de préparation de boissons chaudes.

Il ressort de ces antériorités précitées que peu de machines offrent la possibilité de préparer soit un café filtre en grande quantité dans une verseuse, soit un café sous pression à l'unité dans une tasse, soit un café sous pression à la tasse avec du lait chaud moussé.

Par ailleurs, parmi les machines précitées offrant la possibilité de préparer un café sous pression à la tasse avec du lait chaud moussé, il ressort que ces machines présentent un encombrement important et nécessitent de manipuler la tasse durant la préparation de la boisson, d'abord pour réaliser un lait chaud moussé dans la tasse en la positionnant sur un support de tasse agencé sous une buse ou une douchette, puis pour réaliser un café sous pression à l'unité dans la tasse en la positionnant sur un autre support de tasse agencé sous une chambre d'infusion.

### Résumé de l'invention

La présente invention a tout d'abord pour objectif de concevoir une machine de préparation de boissons à base de lait chaud moussé, notamment des cafés sous pression à base de lait chaud moussé, permettant ladite préparation sans nécessiter la manipulation de la tasse. Un autre objectif est de simplifier la conception d'une telle machine.

A ce titre, l'invention concerne une machine de préparation de boissons, appelée dans la suite de la description « machine ». Cette boisson sera notamment à base de café, mais on pourrait envisager par exemple une boisson à base de chocolat ou de thé.

Traditionnellement, la machine comprend un réservoir d'eau froide, un système de production et de distribution d'eau chaude, une douchette alimentée par ledit système, un support de dosette et un support de récipient, la douchette et le support de dosette formant une chambre d'infusion. Le support de dosette permet la réception d'une dosette contenant un ingrédient de type café, thé ou chocolat, par exemple ; la configuration du support de dosette dépendra donc en partie de celle de la dosette. Le support de récipient permet la réception d'un récipient, notamment une tasse ; le support pourra être adapté pour recevoir différentes tailles de tasses, selon la boisson à préparer.

En outre, selon l'invention, la machine comprend un dispositif de commande comportant au moins une fonction de préparation d'une boisson lactée dans un récipient en le conservant sur le support de récipient durant toute la préparation.

Ce dispositif de commande comprend une carte électronique de commande comportant au moins des premier et deuxième programmes configurés pour :
- lors du lancement du premier programme, actionner ledit système pour distribuer un premier volume d'eau chaude prédéterminé, le support de dosette étant retiré de sorte que la douchette produise un jet d'eau chaude directement dans le récipient contenant un produit lacté, notamment du lait liquide ou du lait en poudre, ce qui permet de chauffer le lait et de le faire mousser ;
- lors du lancement du deuxième programme, consécutif au lancement du premier programme, actionner ledit système pour distribuer un second volume d'eau chaude prédéterminé, le support de dosette étant positionné avec une dosette de sorte que la douchette produise un jet d'eau chaude dans la chambre d'infusion, ce qui permet de déverser l'infusion dans le récipient contenant déjà le lait chaud moussé.

La douchette est agencée à l'aplomb du support de récipient. Ainsi, la douchette expulse des jets d'eau sous pression dirigés directement vers le produit lacté présent dans le récipient agencé sur le support. Les jets d'eau arrivent sur le produit lacté avec une vitesse suffisante pour créer des bulles d'air dans le produit lacté et le faire mousser.

Par une fonction de préparation d'une boisson lactée, on comprend une fonction de préparation d'une boisson à base de lait moussée et d'infusion, notamment de café.

Ainsi, la machine exploite la présence de la douchette de la chambre d'infusion pour l'utiliser également en tant que douchette de réchauffage et de moussage du lait disposé dans le récipient, simplement en retirant le support de dosette et en lançant le premier programme qui actionne en conséquence le système de production et de distribution d'eau chaude. Une fois le lait chauffé et moussé dans le récipient, le support de dosette est positionné avec une dosette sous la douchette pour reformer la chambre d'infusion, puis le deuxième programme est lancé, ce qui permet de préparer la boisson sous pression qui vient se déverser dans le récipient contenant déjà le lait chaud moussé. Le tout s'effectuant sans déplacer le récipient du support de récipient. L'actionnement du système de production et de distribution d'eau chaude, lors du lancement du deuxième programme, s'effectue en considération du premier programme lancé précédemment afin de tenir compte de la présence du lait chaud moussé dans le récipient.

La conception de la machine selon l'invention, avec une seule douchette et un seul support de récipient permettant de réaliser à la fois le lait chaud moussé et la boisson sous pression grâce au lancement consécutif du premier programme puis du deuxième programme et sans déplacer le récipient, permet avantageusement de réduire l'encombrement de la machine par rapport aux machines antérieures remplissant ces mêmes fonctions par le biais d'organes séparés et en positionnant le récipient sur des supports de récipient distincts.

Selon la machine objet de l'invention, le système de production et de distribution d'eau chaude comprend une pompe, les premier et second programmes étant configurés pour actionner la pompe de sorte à distribuer le premier volume d'eau chaude prédéterminé avec un premier débit et à distribuer le second volume d'eau chaude prédéterminé avec un second débit.

Selon une réalisation de l'invention, la machine comprend un seul et même premier organe de commande permettant les lancements des premier et deuxième programmes. Cela permet de réduire le nombre d'organes de commande sur la machine.

On peut cependant envisager une variante selon laquelle la machine comprend deux premiers organes de commande distincts permettant respectivement les lancements des premier et deuxième programmes.

Selon une réalisation de la machine, la douchette comprend entre trois et huit orifices de distribution, ce qui permet d'assurer une répartition convenable de l'eau chaude lors de son déversement directement dans le récipient, pour le moussage du lait dans le récipient, ou lors de son déversement sur la dosette dans la chambre d'infusion. De préférence, chaque orifice de distribution présente un diamètre compris entre 0,4 mm et 0,8 mm, ce qui permet la projection de jets d'eau fins favorisant le moussage du lait dans le récipient.

Selon la machine objet de l'invention, les premier et deuxième programmes de la carte électronique de commande permettent respectivement de distribuer un premier volume d'eau chaude compris entre V1a et V1b et un second volume d'eau chaude compris entre V2a et V2b, V1a étant égal à 30 cm³ et V1b étant égal à 100 cm³, V2a étant égal à 30 cm³ et V2b étant égal à 150 cm³.

Ainsi, le volume final dans la tasse est compris entre 100 cm³ et 300 cm³.

Selon l'invention, la machine comprend des moyens de déplacement de la douchette d'une position ouverte permettant le retrait ou le positionnement du support de dosette, vers une position fermée permettant la constitution de la chambre d'infusion ou la production d'un jet d'eau directement dans un récipient disposé sur le support de récipient.

Selon l'invention, la machine comprend des moyens de déplacement du support de récipient d'une position de réception du récipient vers une position de rangement. En outre, la machine comprend une base, la position de rangement du support de récipient permettant de libérer un espace sous la chambre d'infusion pour le positionnement sur cette base d'un autre type de récipient d'une plus grande contenance, un tel récipient étant par exemple une verseuse ou un grand gobelet.

Selon l'invention, la machine comprend une verseuse munie d'un porte-filtre. En outre, le dispositif de commande comprend un second organe de commande et la carte électronique de commande comporte un troisième programme configuré pour, lors du lancement du troisième programme réalisé au moyen du second organe de commande, actionner le système de production et de distribution d'eau chaude jusqu'à épuisement du réservoir, le support de dosette étant positionné sans dosette pour que l'eau chaude distribuée par la douchette dans la chambre d'infusion soit déversée telle quelle dans le porte-filtre positionné sous ladite chambre, le support de récipient étant en position de rangement.

Ainsi, outre la fonction de préparation d'une boisson avec du lait chaud moussé, la machine selon l'invention permet également la préparation d'un café filtre en grande quantité dans une verseuse, sans augmenter son encombrement.

Selon la machine objet de l'invention, le dispositif de commande comprend un troisième organe de commande et la carte électronique de commande comporte un quatrième programme configuré pour, lors du lancement du quatrième programme réalisé au moyen du troisième organe de commande, actionner le système de production et de distribution d'eau chaude pour distribuer un quatrième volume d'eau chaude prédéterminé, le support de dosette étant positionné avec une dosette de sorte que la douchette produise un jet d'eau chaude dans la chambre d'infusion, la boisson sous pression préparée se déversant dans un récipient disposé sur le support de récipient.

Ainsi, outre les fonctions de préparation d'une boisson chaude lactée ou de préparation d'un café filtre en grande quantité dans une verseuse, la machine selon l'invention permet également la préparation d'une boisson sous pression à l'unité directement dans un récipient, sans augmenter son encombrement.

On pourrait bien entendu prévoir une variante de machine limitée aux fonctions de préparation de boisson chaude lactée et de boisson chaude sous pression dans un récipient, dans quel cas le support de récipient pourrait être fixe et la carte électronique de commande ne comprendrait que les premier, deuxième et quatrième programmes.

Lorsque le système de production et de distribution d'eau chaude comporte une pompe et que la carte électronique de commande comporte le quatrième programme tel que précité, ledit quatrième programme est configuré pour actionner ladite pompe de sorte à distribuer le quatrième volume d'eau chaude prédéterminé avec un troisième débit.

Lorsque la carte électronique de commande comporte le quatrième programme tel que précité, celui-ci est configuré pour distribuer un quatrième volume d'eau chaude compris entre V4a et V4b, V4a étant égal à 30 cm³ et V4b étant égal à 250 cm³.

### Brève description des figures

Les caractéristiques et avantages de la machine selon l'invention apparaîtront à la lecture de la description suivante d'un mode préféré de réalisation, non limitatif, s'appuyant sur des figures, parmi lesquelles :
- La figure 1 illustre une vue d'ensemble de la machine présentant trois fonctions de préparation d'un café filtre en grande quantité dans une verseuse, d'une boisson sous pression à l'unité dans un récipient, d'une boisson sous pression avec du lait chaud moussé dans un récipient ;
- La figure 2 illustre la machine sans la verseuse, mettant en évidence le support de récipient dans une position de rangement ;
- La figure 3 illustre la machine sans la verseuse, mettant en évidence le support de récipient dans une position de réception du récipient ;
- La figure 4 illustre notamment la présence d'une carte électronique de commande et d'une pompe à l'intérieur de la machine représentée partiellement ;
- Les figures 5 et 6 illustrent la machine avec la chambre d'infusion en position ouverte, le support de dosette étant positionné dans ladite chambre sur la figure 5 et retiré de ladite chambre sur la figure 6 ;
- La figure 7 illustre une réalisation du support de dosette ;
- La figure 8 illustre une vue partielle en coupe montrant la chambre d'infusion formée entre la douchette et le support de dosette ;
- La figure 9 illustre une vue partielle en coupe montrant la douchette qui communique directement avec une ouverture lors du retrait du support de dosette.

### Description détaillée

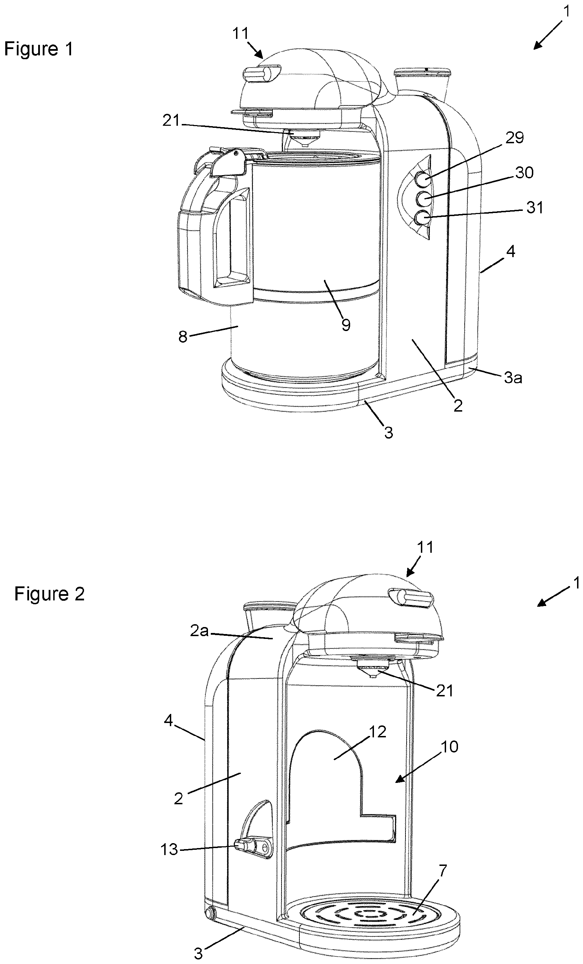

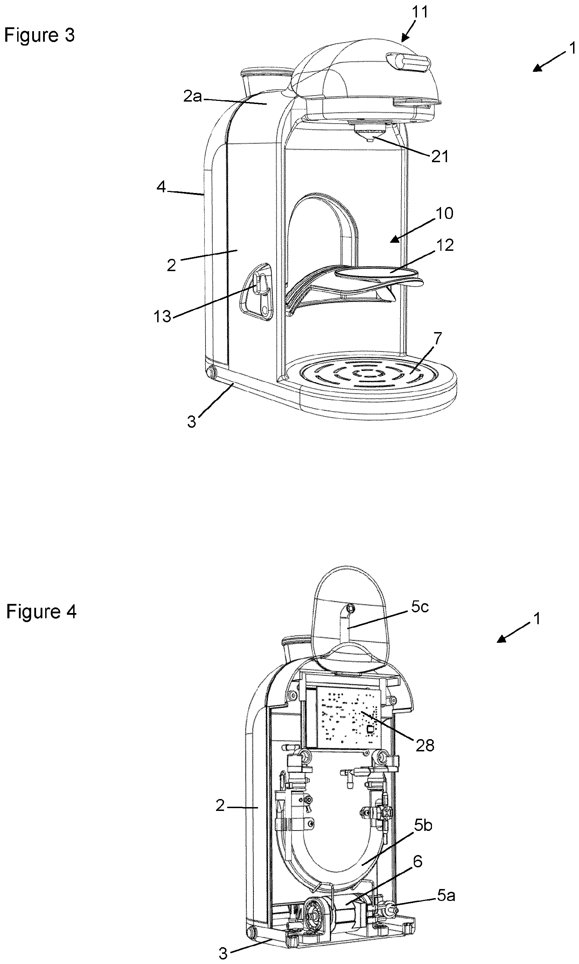

Tel qu'illustré sur la figure 1, la machine 1 comprend un châssis 2, un socle 3 et un réservoir 4. Le châssis 2 reçoit les divers composants électriques, électroniques et hydrauliques, comme cela est le cas sur les machines traditionnelles. Le socle 3 permet de positionner la machine 1 sur un support, par exemple un plan de table ou une tablette. Le réservoir 4 est positionné à l'arrière du châssis 2 et s'étend sur la hauteur dudit châssis 2 ; ce réservoir 4 s'engage sur la partie arrière 3a du socle 3 pour sa connexion à une partie amont 5a du circuit hydraulique (non illustré en détail sur la figure 4) raccordée en entrée d'une pompe 6, illustrée en figure 4, tandis que la sortie de cette pompe 6 est raccordée sur une partie résistive 5b dudit circuit hydraulique de sorte à permettre le réchauffement de l'eau circulant au moment de la préparation d'une boisson. Bien entendu, on pourrait envisager une autre configuration du réservoir 4 sur la machine 1 selon des variantes de réalisation.

Tel qu'illustré en regard des figures 1 et 2, le socle 3 de la machine 1 comprend une base 7 permettant la réception d'une verseuse 8 qui reçoit elle-même un porte-filtre 9. La verseuse 8 et le porte-filtre 9 viennent se loger dans un espace 10 sous une tête 11 agencée en partie supérieure 2a du châssis 2, au-dessus de la base 7.

Tel qu'illustré en regard des figures 2 et 3, la machine 1 comprend un support de récipient 12 qui est monté en liaison pivot vis-à-vis du châssis 2 de manière à basculer d'une position de rangement illustrée en figure 2, selon laquelle le support de récipient est encastré dans le châssis 2, vers une position de réception d'un récipient, notamment une tasse, selon laquelle le support de récipient est positionné dans l'espace 10 sous la tête 11 et au-dessus de la base 7, plus ou moins à mi-hauteur dans cet espace 10. La manipulation du support de récipient 12 s'effectue au moyen d'une manette 13 agencée sur le châssis 2.

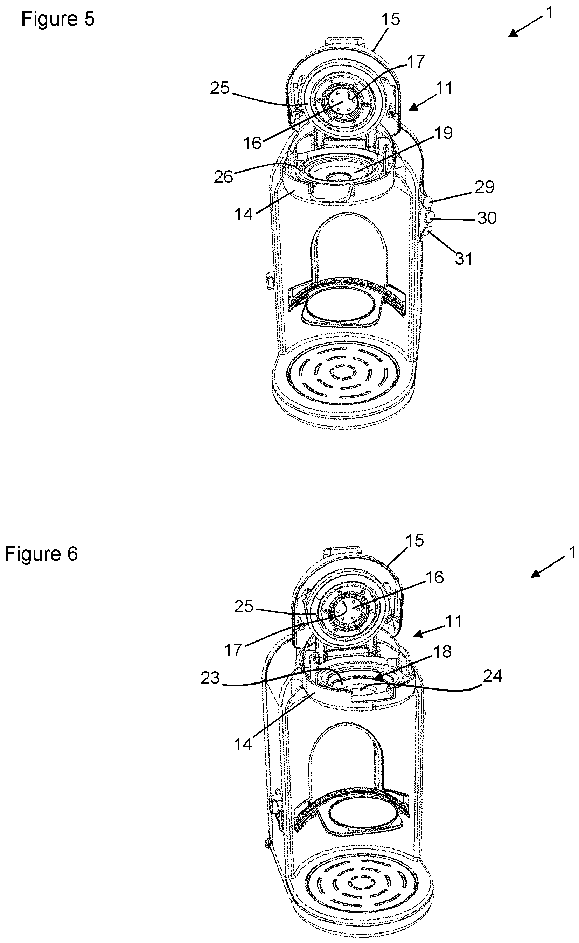

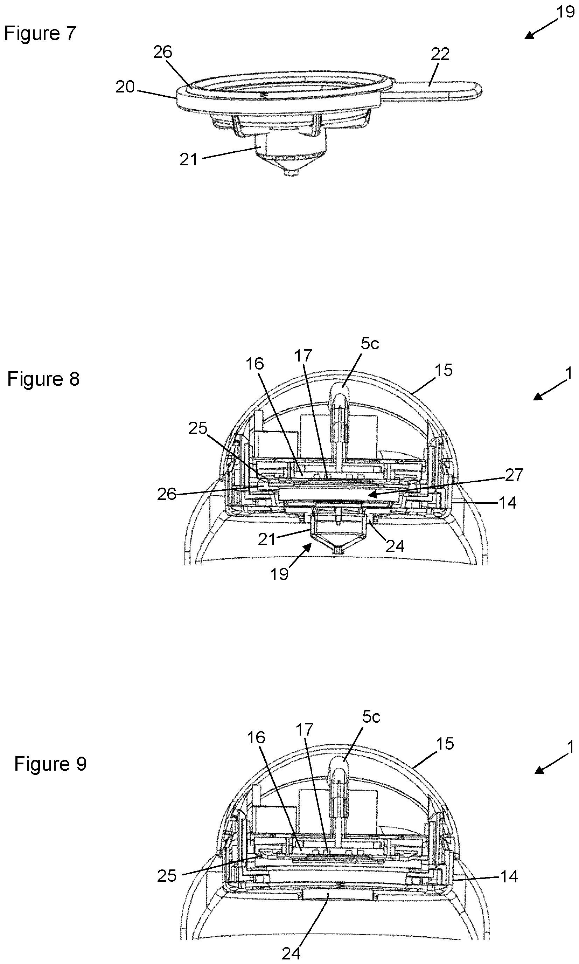

La tête 11 de la machine 1 comprend un corps 14 et un capot 15 articulé vis-à-vis du corps 14 pour pivoter d'une position fermée illustrée en figures 1 à 3, 8 et 9, vers une position ouverte illustrée en figures 5 et 6. Le capot 15 intègre une douchette 16 qui est reliée à une partie aval 5c du circuit hydraulique (non illustré en détail sur la figure 4). Cette douchette 16 comporte six orifices de distribution 17, mais un nombre plus ou moins important est envisageable, de préférence entre six et huit orifices de distribution 17. Ces orifices de distribution 17 présentent un diamètre qui est préférentiellement compris entre 0,4 mm et 0,8 mm. Le corps 14 comporte une zone de réception 18 d'un support de dosette 19, illustré plus en détail sur la figure 7. Le support de dosette 19 comprend une coupelle 20 de forme circulaire permettant la réception d'une dosette (non illustrée) et une buse 21 prolongeant vers le bas la coupelle 20, avec laquelle ladite buse 21 communique. Ce support de dosette 19 comprend également un manche 22 pour sa manipulation. La zone de réception 18 comporte un fond 23 muni d'une ouverture 24 ; lors du positionnement du support de dosette 19 dans la zone de réception 18, la buse 21 passe au travers de l'ouverture 24 et se positionne sous la tête 11 de manière à être positionnée au-dessus du support de récipient 12 et de la base 7, comme l'illustrent les figures 1 à 3 et 8. La douchette 16 comporte un joint d'étanchéité 25 qui vient en appui contre un rebord 26 sur la coupelle 20 lors de la fermeture du capot 15 sur le corps 14, de manière à constituer une chambre d'infusion 27, comme l'illustre la figure 8. Lorsque le capot 15 est fermé sur le corps 14 alors que le support de dosette 19 a été préalablement retiré de la zone de réception 18, les orifices de distribution 17 de la douchette 16 communiquent directement avec l'ouverture 24 sur le corps 14, comme l'illustre la figure 9.

La machine 1 comprend une carte électronique de commande 28 illustrée en figure 4 et trois organes de commande 29, 30, 31 placés sur le châssis 2, comme l'illustre la figure 1. La carte électronique de commande 28 comporte quatre programmes configurés pour réaliser différents cycles de préparation d'une boisson lors de leur lancement, en fonction de l'organe de commande 29, 30, 31 qui est activé.

Le premier programme et le deuxième programme servent à la préparation d'une boisson sous pression avec du lait chaud moussé, leurs lancements s'effectuant en activant le premier organe de commande 29. Lors de cette préparation, la verseuse 8 et le porte-filtre 9 sont retirés et le support de récipient 12 est en position de réception, comme l'illustre la figure 3. En outre, le support de dosette 19 est dans un premier temps retiré de la zone de réception 18 sur le corps 14, la tête 11 se trouvant alors dans la configuration illustrée en figure 9, avec les orifices de distribution 17 de la douchette 16 qui communiquent directement avec l'ouverture 24 sur le corps 14 et avec un récipient (non illustré) positionné sur le support de récipient 12.

L'utilisateur positionne donc son récipient comprenant du lait liquide ou du lait en poudre sur le support de récipient 12 puis active une première fois le premier organe de commande 29. La carte électronique de commande 28 détecte cette première activation et lance le premier programme qui commande la pompe 6 et la partie résistive 5b du circuit hydraulique pour délivrer un volume d'eau chaude de préférence compris entre V1a et V1b, V1a étant égal à 30 cm³ et V1b étant égal à 100 cm³, de préférence V1 égal à 70 cm³ avec un débit de préférence compris entre D1a et D1b, D1a étant égal à 220 cm³/mn et D1b étant égal à 300 cm³/mn, de préférence D1 égal à 240 cm³/mn, ce qui assure une température de l'eau de l'ordre de T1 égale à 95°C.

La douchette 16 projette alors de fins jets d'eau chaude directement dans le récipient, ce qui permet de réchauffer et faire mousser le lait dans le récipient.

Une fois cette première étape de la préparation de la boisson lactée réalisée, l'utilisateur ouvre le capot 15 et positionne le support de dosette 19 avec une dosette (non illustrée) dans la zone de réception 18, puis referme le capot 15, la tête 11 se trouvant dans la configuration illustrée en figure 8 (avec la dosette positionnée dans la chambre d'infusion 27). Puis l'utilisateur active une seconde fois le premier organe de commande 29 ; la carte électronique de commande 28 détecte cette activation consécutive à la première et lance alors le deuxième programme qui commande la pompe 6 et la partie résistive 5b du circuit hydraulique pour délivrer un volume d'eau chaude de préférence compris entre V2a et V2b, V2a étant égal à 30 cm³ et V2b étant égal à 150 cm³, de préférence V2 égal à 100 cm³ avec un débit de préférence compris entre D2a et D2b, D2a étant égal à 220 cm³/mn et D2b étant égal à 300 cm³/mn, de préférence D2 égal à 250 cm³/mn, ce qui assure une température de l'eau de l'ordre de T2 égale à 94°C. La douchette 16 projette alors de fins jets d'eau chaude dans la chambre d'infusion 27, ce qui permet d'infuser l'ingrédient se trouvant dans la dosette, par exemple du café ou du thé, l'infusion sous pression dans la chambre d'infusion 27 passant au travers du support de dosette 19 et sortant alors progressivement par la buse 21 pour se déverser dans le récipient resté sur le support de récipient 12 et contenant déjà le lait chaud moussé.

Le troisième programme sert à la préparation d'un café en grande quantité, son lancement s'effectuant en activant le second organe de commande 30. Lors de cette préparation, la verseuse 8 et le porte-filtre 9 sont positionnés sur la base 7 et le support de récipient 12 est en position de rangement, comme l'illustrent les figures 1 et 2. Cette base 7 sera de préférence chauffante de sorte à maintenir chaud le café dans la verseuse 8 une fois le cycle de préparation terminé. L'utilisateur ouvre le capot 15 et positionne le support de dosette 19 sans dosette dans la zone de réception 18, puis referme le capot 15, la tête 11 se trouvant dans la configuration illustrée en figure 8. Puis l'utilisateur active le second organe de commande 30 ; la carte électronique de commande 28 détecte cette activation et lance le troisième programme qui commande la pompe 6 et la partie résistive 5b du circuit hydraulique pendant une durée suffisamment longue permettant de garantir l'écoulement de toute la quantité d'eau se trouvant dans le réservoir 4, lequel peut par exemple contenir jusqu'à 1,2 litre d'eau. L'écoulement de l'eau s'effectue avec un débit de préférence compris entre D3a et D3b, D3a étant égal à 220 cm³/mn et D3b étant égal à 300 cm³/mn, de préférence D3 égal à 250 cm³/mn, ce qui assure une température de l'eau de l'ordre de T3 égale à 94°C. La douchette 16 projette alors de fins jets d'eau chaude dans la chambre d'infusion, cette eau chaude passant directement au travers du support de dosette 19 et sortant par la buse 21 pour se déverser dans le porte-filtre 9 contenant un filtre et de la poudre de café (non illustrés), ce qui permet d'infuser le café dans le porte-filtre 9, l'infusion étant filtrée et se déversant dans la verseuse 8.

Le quatrième programme sert à la préparation d'une boisson sous pression à l'unité directement dans un récipient, son lancement s'effectuant en activant le troisième organe de commande 31. Lors de cette préparation, la verseuse 8 et le porte-filtre 9 sont retirés et le support de récipient 12 est en position de réception, comme l'illustre la figure 3. L'utilisateur ouvre le capot 15 et positionne le support de dosette 19 avec une dosette (non illustrée) dans la zone de réception 18, puis referme le capot 15, la tête 11 se trouvant dans la configuration illustrée en figure 8 (avec la dosette positionnée dans la chambre d'infusion 27). Puis l'utilisateur active le troisième organe de commande 31 ; la carte électronique de commande 28 détecte cette activation et lance alors le quatrième programme qui commande la pompe 6 et la partie résistive 5b du circuit hydraulique pour délivrer un volume d'eau chaude de préférence compris entre V4a et V4b, V4a étant égal à 30 cm³ et V4b étant égal à 250 cm³, de préférence V4 égal à 100 cm³ avec un débit de préférence compris entre D4a et D4b, D4a étant égal à 220 cm³/mn et D4b étant égal à 300 cm³/mn, de préférence D4 égal à 250 cm³/mn, ce qui assure une température de l'eau de l'ordre de T4 égale à 94°C. La douchette 16 projette alors de fins jets d'eau chaude dans la chambre d'infusion 27, ce qui permet d'infuser l'ingrédient se trouvant dans la dosette, par exemple du café ou du thé, l'infusion sous pression dans la chambre d'infusion 27 passant au travers du support de dosette 19 et sortant alors progressivement par la buse 21 pour se déverser dans le récipient préalablement positionné sur le support de récipient 12.

Ainsi, grâce à sa configuration, à sa carte électronique de commande 28 intégrant les quatre programmes et à ses trois organes de commande 29, 30, 31, la machine 1 dispose d'un encombrement réduit tout en offrant la possibilité de préparer au moins trois types de boissons différentes - un café filtre en grande quantité, une boisson sous pression à l'unité dans un récipient et une boisson avec du lait chaud moussé - au moyen d'une seule douchette 16.

Bien entendu, on pourrait envisager des variantes sans sortir du cadre de l'invention. Par exemple, la machine pourrait comprendre un organe de commande additionnel de sorte à permettre le lancement du deuxième programme consécutivement au lancement de premier programme réalisé au moyen du premier organe de commande 29. On pourrait aussi utiliser le troisième organe de commande 31 pour le lancement de ce deuxième programme, la carte électronique faisant alors la distinction entre une activation du troisième organe de commande 31 réalisée consécutivement au lancement du premier programme et permettant alors le lancement du deuxième programme pour la préparation de la boisson lactée, et une activation dudit troisième organe de commande 31 réalisée de manière autonome et permettant alors le lancement du quatrième programme pour la préparation d'une boisson sous pression à l'unité dans un récipient.

On pourrait également prévoir une variante de tête 11, avec un tiroir (non illustré) incorporant la zone de réception 18 et l'ouverture 24 et permettant la réception du support de dosette 19, ledit tiroir étant monté en glissière sur la tête 11 pour permettre le retrait ou le positionnement du support de dosette 19.

On pourrait aussi prévoir une variante de support de réception 12, celui-ci pouvant par exemple pivoter latéralement pour permettre son dégagement de l'espace 10 et le positionnement de la verseuse 8 avec son porte-filtre 9 sur la base 7.

## Revendications

1. Machine (1) de préparation de boissons comprenant un réservoir (4) d'eau froide, un système de production et de distribution d'eau chaude (6, 5b), une douchette (16) alimentée par ledit système, un support de dosette (19) et un support de récipient (12), la douchette et le support de dosette formant une chambre d'infusion (27), la douchette (16) étant agencée à l'aplomb du support de récipient (12), **caractérisée en ce que** ladite machine comprend un dispositif de commande comportant au moins une fonction de préparation d'une boisson lactée dans un récipient en le conservant sur le support de récipient durant toute la préparation, le dispositif de commande comprenant une carte électronique de commande (28) comportant au moins des premier et deuxième programmes pour :
- lors du lancement du premier programme, actionner ledit système (6, 5b) pour distribuer un premier volume d'eau chaude prédéterminé, le support de dosette (19) étant retiré de sorte que la douchette (16) produise un jet d'eau chaude directement dans le récipient contenant un produit lacté ;
- lors du lancement du deuxième programme, consécutif au lancement du premier programme, actionner ledit système (6, 5b) pour distribuer un second volume d'eau chaude prédéterminé, le support de dosette (19) étant positionné avec une dosette de sorte que la douchette (16) produise un jet d'eau chaude dans la chambre d'infusion (27).

2. Machine (1) selon la revendication 1, dans laquelle le système de production et de distribution d'eau chaude comprend une pompe (6), les premier et deuxième programmes de la carte électronique de commande (28) étant configurés pour actionner la pompe de sorte à distribuer le premier volume d'eau chaude prédéterminé avec un premier débit et à distribuer le second volume d'eau chaude prédéterminé avec un second débit.

3. Machine (1) selon l'une des revendications précédentes, laquelle comprend un seul et même premier organe de commande (29) permettant les lancements des premier et deuxième programmes.

4. Machine (1) selon l'une des revendications 1 ou 2, laquelle comprend deux premiers organes de commande (29) distincts permettant les lancements des premier et deuxième programmes.

5. Machine (1) selon l'une des revendications précédentes, dans laquelle la douchette (16) comprend entre trois et huit orifices de distribution (17).

6. Machine (1) selon la revendication 5, dans laquelle chaque orifice de distribution (17) présente un diamètre compris entre 0,4 mm et 0,8 mm.

7. Machine (1) selon l'une des revendications précédentes, dans laquelle les premier et deuxième programmes de la carte électronique de commande (28) permettent de distribuer un premier volume d'eau chaude compris entre V1a et V1b et un second volume d'eau chaude compris entre V2a et V2b, V1a étant égal à 30 cm³ et V1b étant égal à 100 cm³, V2a étant égal à 30 cm³ et V2b étant égal à 150 cm³.

8. Machine (1) selon l'une des revendications précédentes, laquelle comprend des moyens de déplacement de la douchette (16) d'une position ouverte permettant le retrait ou le positionnement du support de dosette (19), vers une position fermée permettant la constitution de la chambre d'infusion (27) ou la production d'un jet d'eau directement dans un récipient disposé sur le support de récipient (12).

9. Machine (1) selon l'une des revendications précédentes, laquelle comprend des moyens de déplacement du support de récipient (12) d'une position de réception du récipient vers une position de rangement.

10. Machine (1) selon la revendication 9, laquelle comprend une verseuse (8) munie d'un porte-filtre (9), le dispositif de commande comprenant un second organe de commande (30), la carte électronique de commande (28) comportant un troisième programme pour, lors du lancement du troisième programme réalisé au moyen du second organe de commande, actionner ledit système (6, 5b) jusqu'à épuisement du réservoir, le support de dosette (19) étant positionné sans dosette pour que l'eau chaude distribuée par la douchette (16) dans la chambre d'infusion (27) soit déversée telle quelle dans le porte-filtre (9) positionné sous ladite chambre, le support de récipient (12) étant en position de rangement.

11. Machine (1) selon l'une des revendications précédentes, dans laquelle le dispositif de commande comprend un troisième organe de commande (31), la carte électronique de commande (28) comportant un quatrième programme pour, lors du lancement du quatrième programme réalisé au moyen du troisième organe de commande, actionner ledit système (6, 5b) pour distribuer un quatrième volume d'eau chaude prédéterminé, le support de dosette (19) étant positionné avec une dosette de sorte que la douchette (16) produise un jet d'eau chaude dans la chambre d'infusion (27), la boisson préparée se déversant dans un récipient disposé sur le support de récipient (12).

12. Machine (1) selon la revendication 11 rattachée à la revendication 2, dans laquelle le quatrième programme est configuré pour actionner la pompe (6) de sorte à distribuer le quatrième volume d'eau chaude prédéterminé avec un quatrième débit.

13. Machine (1) selon l'une des revendications 11 ou 12, dans laquelle le quatrième programme est configuré pour distribuer un quatrième volume d'eau chaude compris entre V4a et V4b, V4a étant égal à 30 cm³ et V4b étant égal à 250 cm³.

## Patentansprüche

1. Maschine (1) zur Zubereitung von Getränken, umfassend einen Behälter (4) für kaltes Wasser, ein System zur Erzeugung und Abgabe von heißem Wasser (6, 5b), eine von diesem System versorgte Brause (16), einen Kapselhalter (19) und einen Behälterträger (12), wobei die Brause und der Kapselhalter eine Infusionskammer (27) bilden, wobei die Brause (16) senkrecht über dem Behälterträger (12) angeordnet ist, **dadurch gekennzeichnet, dass** die Maschine eine Steuervorrichtung umfasst, die mindestens eine Funktion zum Zubereiten eines Milchgetränks in einem Behälter aufweist, indem sie ihn während der gesamten Zubereitung auf dem Behälterträger aufbewahrt, wobei die Steuervorrichtung eine elektronische Steuerkarte (28) umfasst, die mindestens ein erstes und ein zweites Programm aufweist, um:
- beim Starten des ersten Programms das System (6, 5b) zu betätigen, um ein erstes vorbestimmtes Volumen von heißem Wasser abzugeben, wobei der Kapselhalter (19) entfernt wird, so dass die Brause (16) einen Strahl von heißem Wasser direkt in den Behälter erzeugt, der ein Milchprodukt enthält;
- beim Starten des zweiten Programms nach dem Start des ersten Programms das System (6, 5b) zu betätigen, um ein zweites vorbestimmtes Volumen von heißem Wasser abzugeben, wobei der Kapselhalter (19) mit einer Kapsel so positioniert ist, dass die Brause (16) einen Strahl von heißem Wasser in der Brühkammer (27) erzeugt.

2. Maschine (1) nach Anspruch 1, wobei das System zur Erzeugung und Abgabe von heißem Wasser eine Pumpe (6) umfasst, wobei das erste und das zweite Programm der elektronischen Steuerkarte (28) konfiguriert sind, um die Pumpe so zu betätigen, um das erste vorbestimmte Volumen von heißem Wasser mit einer ersten Durchflussrate zu verteilen und um das zweite vorbestimmte Volumen von heißem Wasser mit einer zweiten Durchflussrate zu verteilen.

3. Maschine (1) nach einem der vorhergehenden Ansprüche, die ein und dasselbe erste Steuerelement (29) umfasst, das das Starten des ersten und des zweiten Programms ermöglicht.

4. Maschine (1) nach einem der Ansprüche 1 oder 2, die zwei getrennte erste Steuerelemente (29) aufweist, die das Starten des ersten und des zweiten Programms ermöglichen.

5. Maschine (1) nach einem der vorhergehenden Ansprüche, wobei die Brause (16) zwischen drei und acht Abgabeöffnungen (17) umfasst.

6. Maschine (1) nach Anspruch 5, wobei jede Abgabeöffnung (17) einen Durchmesser zwischen 0,4 mm und 0,8 mm vorweist.

7. Maschine (1) nach einem der vorhergehenden Ansprüche, wobei das erste und das zweite Programm der elektronischen Steuerkarte (28) es ermöglichen, ein erstes Volumen von heißem Wasser zwischen V1a und V1b und ein zweites Volumen von heißem Wasser zwischen V2a und V2b abzugeben, wobei V1a gleich 30 cm³ ist und V1b gleich 100 cm³ ist, wobei V2a gleich 30 cm³ ist, und wobei V2b gleich 150 cm³ ist.

8. Maschine (1) nach einem der vorhergehenden Ansprüche, die Mittel zum Bewegen der Brause (16) aus einer offenen Position, die das Herausziehen oder das Positionieren des Kapselhalters (19) ermöglicht, zu einer geschlossene Position umfasst, die die Bildung der Brühkammer (27) oder die Erzeugung eines Wasserstrahls direkt in einen auf dem Behälterträger (12) angeordneten Behälter ermöglicht.

9. Maschine (1) nach einem der vorhergehenden Ansprüche, die Mittel zum Bewegen des Behälterträgers (12) von einer Position zur Aufnahme des Behälters zu einer Position zur Aufbewahrung umfasst.

10. Maschine (1) nach Anspruch 9, die eine Kanne (8) umfasst, die mit einem Filterhalter (9) versehen ist, wobei die Steuervorrichtung ein zweites Steuerelement (30) umfasst, wobei die elektronische Steuerkarte (28) ein drittes Programm aufweist, um beim Starten des dritten Programms, das mit Hilfe des zweiten Steuerorgans realisiert wird, das System (6, 5b) bis zur Entleerung des Behälters zu betätigen, wobei der Kapselhalter (19) ohne Kapsel positioniert ist, so dass das heiße Wasser, das durch die Brause (16) in die Brühkammer (27) abgegeben wird, als solches in den Filterhalter (9) ausgegossen wird, der unter der Kammer positioniert ist, wobei der Behälterträger (12) in der Position zur Aufbewahrung ist.

11. Maschine (1) nach einem der vorhergehenden Ansprüche, bei der die Steuervorrichtung ein drittes Steuerelement (31) umfasst, wobei die elektronische Steuerkarte (28) ein viertes Programm aufweist, um beim Starten des vierten Programms, das von dem Mittel des dritten Steuerorgans realisiert wird, das System (6, 5b) zu betätigen, um ein viertes vorbestimmtes Volumen von heißem Wasser abzugeben, wobei der Kapselhalter (19) mit einer Kapsel so positioniert ist, dass die Brause (16) einen Strahl von heißem Wasser in der Brühkammer (27) erzeugt, wobei das zubereitete Getränk in einen auf dem Behälterträger (12) angeordneten Behälter ausgegossen wird.

12. Maschine (1) nach Anspruch 11, abhängig von Anspruch 2, wobei das vierte Programm konfiguriert ist, um die Pumpe (6) zu betätigen, um das vierte vorbestimmte Volumen von heißem Wasser mit einer vierten Durchflussrate abzugeben.

13. Maschine (1) nach einem der Ansprüche 11 oder 12, wobei das vierte Programm so konfiguriert ist, um ein viertes Volumen von heißem Wasser zwischen V4a und V4b abzugeben, wobei V4a gleich 30 cm³ ist, und wobei V4b gleich 250 cm³ ist.

## Claims

1. A machine (1) for preparing beverages, the machine comprising a cold-water tank (4), a system for producing and dispensing hot water (6, 5b), a showerhead (16) that is powered by said system, a capsule support (19), and a receptacle support (12), the showerhead and the capsule support forming an infusion chamber (27), the showerhead (16) being arranged vertically in register with the receptacle support (12), said machine being **characterized in that** it further comprises a control device having at least one function for preparing a milk beverage in a receptacle, while keeping said receptacle on the receptacle support throughout preparation, the control device including an electronic control board (28) that includes at least first and second programs that:
- on launching of the first program, actuates said system (6, 5b) so as to dispense a first predetermined volume of hot water, the capsule support (19) being removed so that the showerhead (16) produces a jet of hot water directly into the receptacle containing a milk product; and
- on launching of the second program, consecutively after launching of the first program, actuates said system (6, 5b) so as to dispense a second predetermined volume of hot water, the capsule support (19) being positioned with a capsule so that the showerhead (16) produces a jet of hot water into the infusion chamber (27).

2. A machine (1) according to claim 1, wherein the system for producing and dispensing hot water includes a pump (6), the first and second programs of the electronic control board (28) being configured to actuate the pump so as to dispense the first predetermined volume of hot water at a first flowrate and so as to dispense the second predetermined volume of hot water at a second flowrate.

3. A machine (1) according to either preceding claim, which machine includes a single first control member (29) that enables the first and second programs to be launched.

4. A machine (1) according to claim 1 or claim 2, which machine includes two distinct first control members (29) that enable the first and second programs to be launched.

5. A machine (1) according to any preceding claim, wherein the showerhead (16) has three to eight dispenser orifices (17).

6. A machine (1) according to claim 5, wherein each dispenser orifice (17) presents a diameter lying in the range 0.4 millimeters (mm) to 0.8 mm.

7. A machine (1) according to any preceding claim, wherein the first and second programs of the electronic control board (28) make it possible to dispense a first volume of hot water lying in the range V1a to V1b, and a second volume of hot water lying in the range V2a to V2b, V1a being equal to 30 cubic centimeters (cm³) and V1b being equal to 100 cm³, V2a being equal to 30 cm³ and V2b being equal to 150 cm³.

8. A machine (1) according to any preceding claim, which machine includes movement means for moving the spray head (16) from an open position, which makes it possible to remove or to position the cap support (19), to a closed position, which makes it possible to form the infusion chamber (27) or to produce a jet of water directly into a receptacle arranged on the receptacle support (12).

9. A machine (1) according to any preceding claim, which machine includes movement means for moving the receptacle support (12) from a reception position for receiving the receptacle to a stowage position.

10. A machine (1) according to claim 9, which machine includes a pot or "carafe" (8) provided with a filter holder (9), the control device including a second control member (30), the electronic control board (28) including a third program that, on launching of the third program by means of the second control member, actuates said system (6, 5b) until the tank is empty, the capsule support (19) being positioned without a capsule so that hot water dispensed by the showerhead (16) into the infusion chamber (27) pours directly into the filter holder (9) positioned below said chamber, the receptacle support (12) being in its stowage position.

11. A machine (1) according to any preceding claim, wherein the control device includes a third control member (31), the electronic control board (28) including a fourth program that, on launching of the fourth program by means of the third control member, actuates said system (6, 5b) so as to dispense a fourth predetermined volume of hot water, the capsule support (19) being positioned with a capsule so that the showerhead (16) produces a jet of hot water into the infusion chamber (27), the prepared beverage pouring into a receptacle arranged on the receptacle support (12).

12. A machine (1) according to claim 11 as dependent on claim 2, wherein the fourth program is configured to actuate the pump (6) so as to dispense the fourth predetermined volume of hot water at a fourth flowrate.

13. A machine (1) according to claim 11 or claim 12, wherein the fourth program is configured to dispense a fourth volume of hot water lying in the range V4a to V4b, V4a being equal to 30 cm³ and V4b being equal to 250 cm³.
